# EUROPEAN PATENT APPLICATION

(11) **EP 4 607 476 A1**
(43) Date of publication of application: **27.08.2025**
(21) Application number: 25151914.6
(22) Date of filing: 15.01.2025
(51) Int. Cl.: G06V 10/82, G06T 3/4015

(54) **MINIMAL IMAGE SIGNAL PROCESSING PIPELINE FOR AN EARLY SCENE UNDERSTANDING**

(30) Priority: 21.02.2024 US 202418583642
(71) Applicant: INTEL Corporation, Santa Clara, CA 95054 (US)
(72) Inventor: Rudoy, Dmitry, 3298110 Haifa HA (IL); Kol, Rakefet, 3479701 Haifa HA (IL); Elron, Noam, 6813657 Tel Aviv TA (IL); Levy, Noam, 2172039 Karmiel (IL)
(74) Representative: Samson & Partner Patentanwälte mbB

(57) **Abstract**

A high-level understanding of the scene captured by a camera allows for the use of scene-level understanding in the processing of the captured image. A downscaled image of a captured scene is generated and used as a basis for artificial intelligence analysis before the full image of the captured scene is processed. The downscaled image is generated concurrently with the capturing of the raw image at the image sensor and before full image signal processor (ISP) processing. Neural networks and other AI algorithms can be applied directly to the downscaled image to perform high-level understanding using minimal resources. The processing of the full scale captured image can be adapted to specific scenarios based on the understanding rather than undergoing all-purpose processing. The high-level understanding is provided to the full image processing pipe for enhancements in image quality, video conferencing, face detection, and other user experiences.

## Description

### Technical Field

This disclosure relates generally to signal processing, and more specifically, to image signal processing and artificial intelligence processing.

### Background

The last decade has witnessed a rapid rise in AI (artificial intelligence) based data processing. For image processing, AI models use the output of a full image processing pipeline. AI analysis output can be used for computer vision-based analysis and scene understanding for subsequent frames. However, since AI analysis is performed after full image processing, the output can not be used on the current image frame. The output of the full image processing pipeline is then scaled down to save computational power, but the downscaling itself uses power and compute resources.

### Brief Description of the Drawings

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.
FIG. 1 is a block diagram of an example deep learning system, in accordance with various embodiments.
FIG. 2 illustrates an example overview of an image processing system that includes a high level processing pipeline, in accordance with various embodiments.
FIGS. 3A-3C illustrate an example of a minimal image signal processing pipe, in accordance with various embodiments.
FIG. 4 shows an example of an input to and an output from the minimal image signal processing pipe, in accordance with various embodiments.
FIG. 5 illustrates an example DNN, in accordance with various embodiments.
FIG. 6 is a flowchart showing a method of using a minimal image signal processing for early scene understanding, in accordance with various embodiments.
FIG. 7 is a block diagram of an example computing device, in accordance with various embodiments.

### Detailed Description

### Overview

A high-level understanding of the scene captured by a camera allows for the use of scene-level understanding in the processing of the captured image. In particular, the processing of the captured image can be adapted to specific scenarios based on the understanding rather than undergoing all-purpose processing. In many instances, since image processing AI models use the output of a full image processing pipeline, the high-level understanding of a scene is based on an understanding of a previously captured frame. However, this can result in motion-related artifacts. Early scene analysis of a captured image can prevent motion-related artifacts. Systems and methods are presented herein for achieving early scene understanding. In some examples, a small processed image of a captured scene is generated and used as a basis for artificial intelligence analysis before the full image of the captured scene is processed.

According to various implementations, a downscaled image is generated concurrently with the capturing of the raw image at an image sensor. In particular, the scaled image is generated before full image signal processor (ISP) processing. The systems and methods discussed herein include simplified image processing functions that output a small and fully processed image early in the pipe, where the small image is sufficient for various AI processing tasks. Neural networks and other AI algorithms can be applied directly to the small scale image to perform high-level understanding. The high-level understanding performed on the small scale image uses minimal resources while providing information used by the full image processing pipe for enhancements in image quality and user experience for the full image. The small, processed image can be input to one or more image-based AI systems, allowing for high-level understanding that is used in the full-image processing. When the high-level understanding from the small scale image is applied to the full-image processing, results can include improved image quality, enhanced video conferencing experiences, facilitating face detection, and enabling always-on applications.

For purposes of explanation, specific numbers, materials and configurations are set forth in order to provide a thorough understanding of the illustrative implementations. However, it will be apparent to one skilled in the art that the present disclosure may be practiced without the specific details or/and that the present disclosure may be practiced with only some of the described aspects. In other instances, well known features are omitted or simplified in order not to obscure the illustrative implementations.

Further, references are made to the accompanying drawings that form a part hereof, and in which is shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the claimed subject matter. However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

For the purposes of the present disclosure, the phrase "A or B" or the phrase "A and/or B" means (A), (B), or (A and B). For the purposes of the present disclosure, the phrase "A, B, or C" or the phrase "A, B, and/or C" means (A), (B), (C), (A and B), (A and C), (B and C), or (A, B, and C). The term "between," when used with reference to measurement ranges, is inclusive of the ends of the measurement ranges.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicates that different instances of like objects are being referred to and are not intended to imply that the objects so described must be in a given sequence, either temporally, spatially, in ranking or in any other manner.

In the following detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value as described herein or as known in the art. Similarly, terms indicating orientation of various elements, e.g., "coplanar," "perpendicular," "orthogonal," "parallel," or any other angle between the elements, generally refer to being within +/- 5-20% of a target value as described herein or as known in the art.

In addition, the terms "comprise," "comprising," "include," "including," "have," "having" or any other variation thereof, are intended to cover a non-exclusive inclusion. For example, a method, process, device, or CNN accelerator that comprises a list of elements is not necessarily limited to only those elements but may include other elements not expressly listed or inherent to such method, process, device, or CNN accelerators. Also, the term "or" refers to an inclusive "or" and not to an exclusive "or."

The systems, methods and devices of this disclosure each have several innovative aspects, no single one of which is solely responsible for all desirable attributes disclosed herein. Details of one or more implementations of the subject matter described in this specification are set forth in the description below and the accompanying drawings.

### Example DNN System

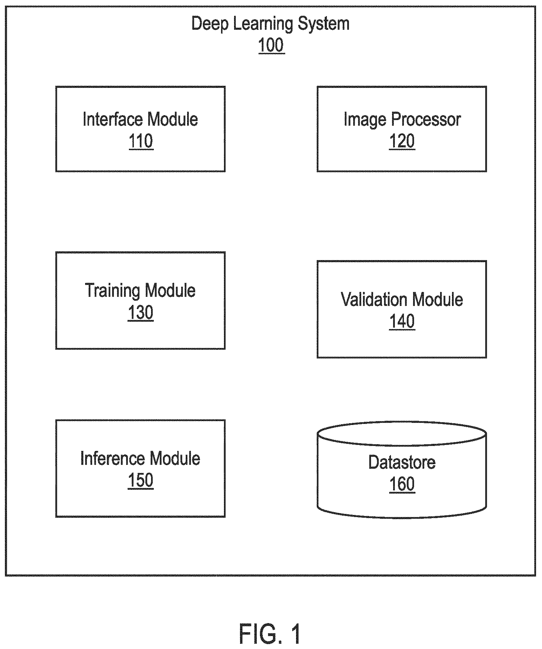

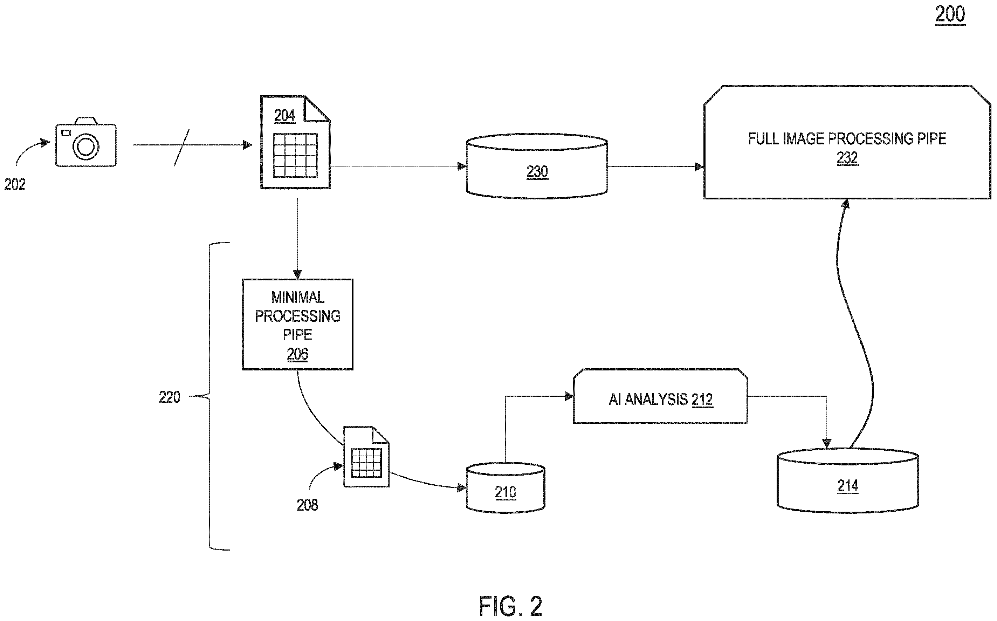

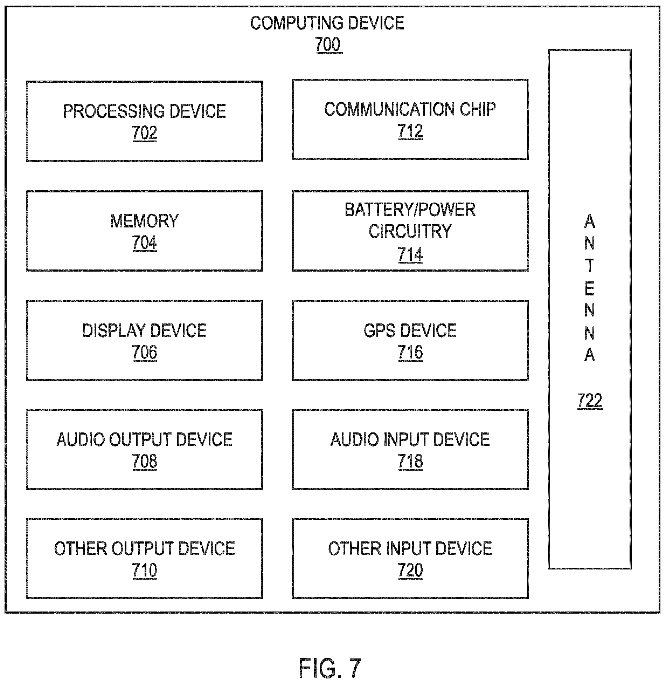

FIG. 1 is a block diagram of an example deep learning system 100, in accordance with various embodiments. The deep learning system 100 includes an image processor 120, which can be used for scene understanding and to improve image quality, to enhance video conferencing experiences, to facilitate face detection, and to enable always-on applications. In some examples, the image processor 120 includes two image processing pipes (a full image processing pipe and a minimal image processing pipe) as described below with respect to FIGS. 2, 3A-3C, and 4. In some examples, the deep learning system 100 trains deep neural networks (DNNs) for various tasks, including image processing and scene understanding. The deep learning system 100 includes an interface module 110, an image processor 120, a training module 130, a validation module 140, an inference module 150, and a datastore 160. In other embodiments, alternative configurations, different or additional components may be included in the deep learning system 100. Further, functionality attributed to a component of the deep learning system 100 may be accomplished by a different component included in the deep learning system 100 or a different system. The deep learning system 100 or a component of the deep learning system 100 (e.g., the training module 130 or inference module 150) may include the computing device 700 in FIG. 7.

The interface module 110 facilitates communications of the deep learning system 100 with other systems. As an example, the interface module 110 supports the deep learning system 100 to distribute trained DNNs to other systems, e.g., computing devices configured to apply DNNs to perform tasks. As another example, the interface module 110 establishes communications between the deep learning system 100 with an external database to receive data that can be used to train DNNs or input into DNNs to perform tasks. In some embodiments, data received by the interface module 110 may have a data structure, such as a matrix. In some embodiments, data received by the interface module 110 may be an image, a series of images, and/or a video stream.

The image processor 120 performs image processing on video images. In general, the image processor 120 receives a raw image from an image sensor. The image processor 120 generates a RGB image from the raw image. As described below, the image processor 120 includes two pipes, with a full image processing pipe generating a full scale RGB image, and a minimal processing pipe generating a downscaled RGB image that is used to perform a high-level understanding of the input image. In the minimal processing pipe, the image processor 120 uses the downscaled RGB image to generate a high level understanding of the image, and feeds the high level understanding back to the full image processing pipe. For example, the high level understanding can include a segmentation map. In various examples, the image processor 120 includes a neural network to perform AI analysis on the downscaled RGB image and generate the high level understanding. In some examples, the image processor 120 includes a neural network that receives the high level understanding and the full scale RGB image, and performs AI analysis on the full scale RGB image using the high level understanding. The AI analysis can include feature detection, improved image quality, enhanced video conferencing experiences, facilitating face detection, and so on. The neural network configured to perform AI analysis on the full scale RGB image can use the high level understanding generated by the neural network configured to perform AI analysis on the downscaled RGB image. Using the high level understanding, the neural network configured to perform AI analysis on the full scale RGB image can more efficiently and quickly process the full scale RGB image to generate the full scale image output. In various examples, using the image processor 120 with the high level understanding based on the input image as processed by the minimal processing pipe, more accurate full scale image output can be generated in real time.

During training, the image processor 120 can use a training data set including labeled images and image sets. Image sets can include raw images, full scale labeled RGB images, and downscaled labeled RGB images. Image sets can include the high level understanding generated by the minimal processing pipe, as well as the full scale image output. In some examples, differences between the output of the image processor 120 and the training data set can be used to calibrate the image processor 120 to minimize the differences.

In various examples, as described herein, the image processor 120 includes one or more neural networks for processing input images. In some examples, the image processor 120 includes one or more deep neural networks (DNN) for processing input images. The training module 130 trains DNNs using training datasets. In some embodiments, a training dataset for training a DNN may include one or more images and/or videos, each of which may be a training sample. In some examples, the training module 130 trains the image processor 120. The training module 130 may receive real-world video data for processing with the image processor 120 as described herein. In some embodiments, the training module 130 may input different data into different layers of the DNN. For every subsequent DNN layer, the input data may be less than the previous DNN layer. The training module 130 may adjust internal parameters of the DNN to minimize a difference between training data output and the video processed by the image processor 120. In some examples, the difference can be the different between corresponding output frames in the video processed by the image processor 120 and the training data. In some examples, the difference between corresponding output frames can be measured as the number of pixels in the corresponding output frames that are different from each other.

In some embodiments, a part of the training dataset may be used to initially train the DNN, and the rest of the training dataset may be held back as a validation subset used by the validation module 140 to validate performance of a trained DNN. The portion of the training dataset not including the tuning subset and the validation subset may be used to train the DNN.

The training module 130 also determines hyperparameters for training the DNN. Hyperparameters are variables specifying the DNN training process. Hyperparameters are different from parameters inside the DNN (e.g., weights of filters). In some embodiments, hyperparameters include variables determining the architecture of the DNN, such as number of hidden layers, etc. Hyperparameters also include variables which determine how the DNN is trained, such as batch size, number of epochs, etc. A batch size defines the number of training samples to work through before updating the parameters of the DNN. The batch size is the same as or smaller than the number of samples in the training dataset. The training dataset can be divided into one or more batches. The number of epochs defines how many times the entire training dataset is passed forward and backwards through the entire network. The number of epochs defines the number of times that the deep learning algorithm works through the entire training dataset. One epoch means that each training sample in the training dataset has had an opportunity to update the parameters inside the DNN. An epoch may include one or more batches. The number of epochs may be 1, 10, 50, 100, or even larger.

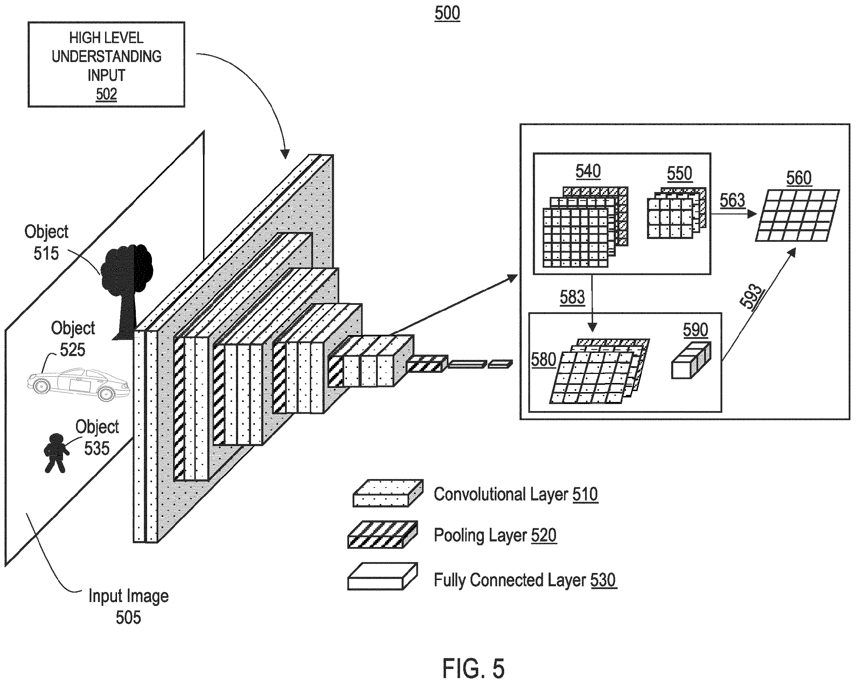

The training module 130 defines the architecture of the DNN, e.g., based on some of the hyperparameters. The architecture of the DNN includes an input layer, an output layer, and a plurality of hidden layers. The input layer of an DNN may include tensors (e.g., a multidimensional array) specifying attributes of the input image, such as the height of the input image, the width of the input image, and the depth of the input image (e.g., the number of bits specifying the color of a pixel in the input image). The output layer includes labels of objects in the input layer. The hidden layers are layers between the input layer and output layer. The hidden layers include one or more convolutional layers and one or more other types of layers, such as pooling layers, fully connected layers, normalization layers, softmax or logistic layers, and so on. The convolutional layers of the DNN abstract the input image to a feature map that is represented by a tensor specifying the feature map height, the feature map width, and the feature map channels (e.g., red, green, blue images include 3 channels). A pooling layer is used to reduce the spatial volume of input image after convolution. It is used between 2 convolution layers. A fully connected layer involves weights, biases, and neurons. It connects neurons in one layer to neurons in another layer. It is used to classify images between different categories by training. An example of a convolutional neural network is described below in greater detail with respect to FIG. 5.

In the process of defining the architecture of the DNN, the training module 130 also adds an activation function to a hidden layer or the output layer. An activation function of a layer transforms the weighted sum of the input of the layer to an output of the layer. The activation function may be, for example, a rectified linear unit activation function, a tangent activation function, or other types of activation functions.

After the training module 130 defines the architecture of the DNN, the training module 130 inputs a training dataset into the DNN. The training dataset includes a plurality of training samples. An example of a training dataset includes a series of images of a video stream. Unlabeled, real-world video is input to the image processor, and processed using the image processor parameters of the DNN to produce two different model-generated outputs: a first time-forward model-generated output and a second time-reversed model-generated output. In the backward pass, the training module 130 modifies the parameters inside the DNN ("internal parameters of the DNN") to minimize the differences between the first model-generated output is and the second model generated output. The internal parameters include weights of filters in the convolutional layers of the DNN. In some embodiments, the training module 130 uses a cost function to minimize the differences.

The training module 130 may train the DNN for a predetermined number of epochs. The number of epochs is a hyperparameter that defines the number of times that the deep learning algorithm will work through the entire training dataset. One epoch means that each sample in the training dataset has had an opportunity to update internal parameters of the DNN. After the training module 130 finishes the predetermined number of epochs, the training module 130 may stop updating the parameters in the DNN. The DNN having the updated parameters is referred to as a trained DNN.

The validation module 140 verifies accuracy of trained DNNs. In some embodiments, the validation module 140 inputs samples in a validation dataset into a trained DNN and uses the outputs of the DNN to determine the model accuracy. In some embodiments, a validation dataset may be formed of some or all the samples in the training dataset. Additionally or alternatively, the validation dataset includes additional samples, other than those in the training sets. In some embodiments, the validation module 140 may determine an accuracy score measuring the precision, recall, or a combination of precision and recall of the DNN. The validation module 140 may use the following metrics to determine the accuracy score: Precision = TP / (TP + FP) and Recall = TP / (TP + FN), where precision may be how many the reference classification model correctly predicted (TP or true positives) out of the total it predicted (TP + FP or false positives), and recall may be how many the reference classification model correctly predicted (TP) out of the total number of objects that did have the property in question (TP + FN or false negatives). The F-score (F-score = 2 * PR / (P + R)) unifies precision and recall into a single measure.

The validation module 140 may compare the accuracy score with a threshold score. In an example where the validation module 140 determines that the accuracy score of the augmented model is lower than the threshold score, the validation module 140 instructs the training module 130 to re-train the DNN. In one embodiment, the training module 130 may iteratively re-train the DNN until the occurrence of a stopping condition, such as the accuracy measurement indication that the DNN may be sufficiently accurate, or a number of training rounds having taken place.

The inference module 150 applies the trained or validated DNN to perform tasks. The inference module 150 may run inference processes of a trained or validated DNN. The inference module 150 may input real-world data into the DNN and receive an output of the DNN. The output of the DNN may provide a solution to the task for which the DNN is trained for. In various examples, small scale input (e.g., a small scale image) can save a large number of computations during inference.

The inference module 150 may aggregate the outputs of the DNN to generate a final result of the inference process. In some embodiments, the inference module 150 may distribute the DNN to other systems, e.g., computing devices in communication with the deep learning system 100, for the other systems to apply the DNN to perform the tasks. The distribution of the DNN may be done through the interface module 110. In some embodiments, the deep learning system 100 may be implemented in a server, such as a cloud server, an edge service, and so on. The computing devices may be connected to the deep learning system 100 through a network. Examples of the computing devices include edge devices.

The datastore 160 stores data received, generated, used, or otherwise associated with the deep learning system 100. For example, the datastore 160 stores video processed by the image processor 120 or used by the training module 130, validation module 140, and the inference module 150. The datastore 160 may also store other data generated by the training module 130 and validation module 140, such as the hyperparameters for training DNNs, internal parameters of trained DNNs (e.g., values of tunable parameters of activation functions, such as Fractional Adaptive Linear Units (FALUs)), etc. In the embodiment of FIG. 1, the datastore 160 is a component of the deep learning system 100. In other embodiments, the datastore 160 may be external to the deep learning system 100 and communicate with the deep learning system 100 through a network.

### Example Image Processor Framework

FIG. 2 illustrates an example overview of an image processing system 200 that includes a high level processing pipeline 220, in accordance with various embodiments. The image processing system 200 receives a raw image from an image sensor 202. In various examples, the image sensor 202 is not a part of the image processing system 200, and is connected to the image processing system 200 via a mobile industry processor interface (MIPI). The raw image from the image sensor 202 can be received in a pixel buffer 204 that stores the pixels of the raw image as the pixels are received at the pixel buffer 204. In general, the buffer 204 receives the data from the sensor 202 at a rate determined by the sensor 202, based on the rate the sensor can expose and transmit the image data. In some examples, the sensor 202 exposes multiple lines at a time (e.g., 2, 3, 4, 5, or more lines), and outputs the multiple exposed lines to the buffer 204 as they are exposed (i.e., multiple lines at a time). Generally, an image processing unit does not filter the full scale raw image to generate a filtered full scale image to store in the second memory 230 until the buffer 204 holds the entire raw image. In the image processing system 200, raw image data in the pixel buffer 204 is output to the minimal processing pipe 206 as it is received.

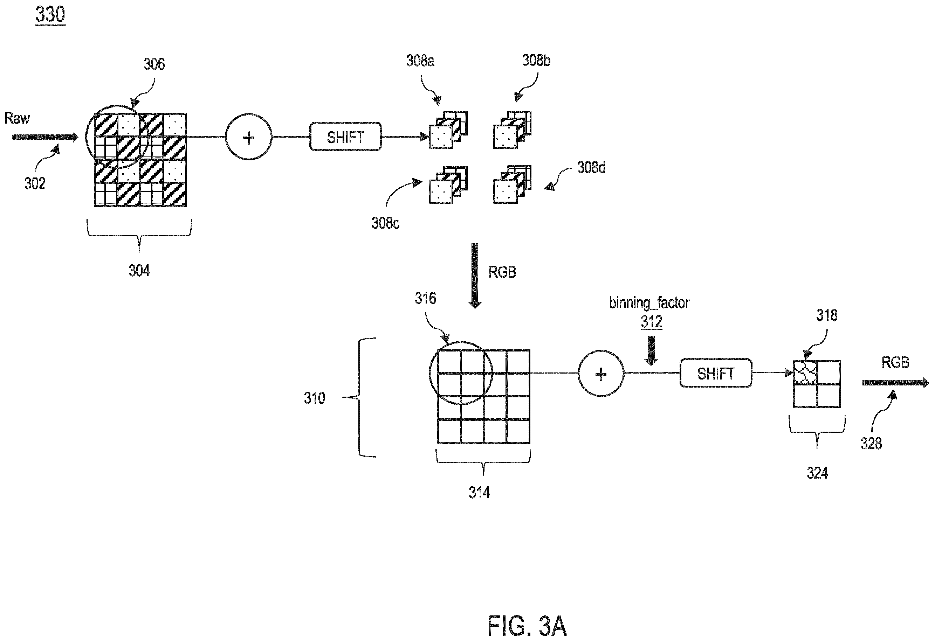

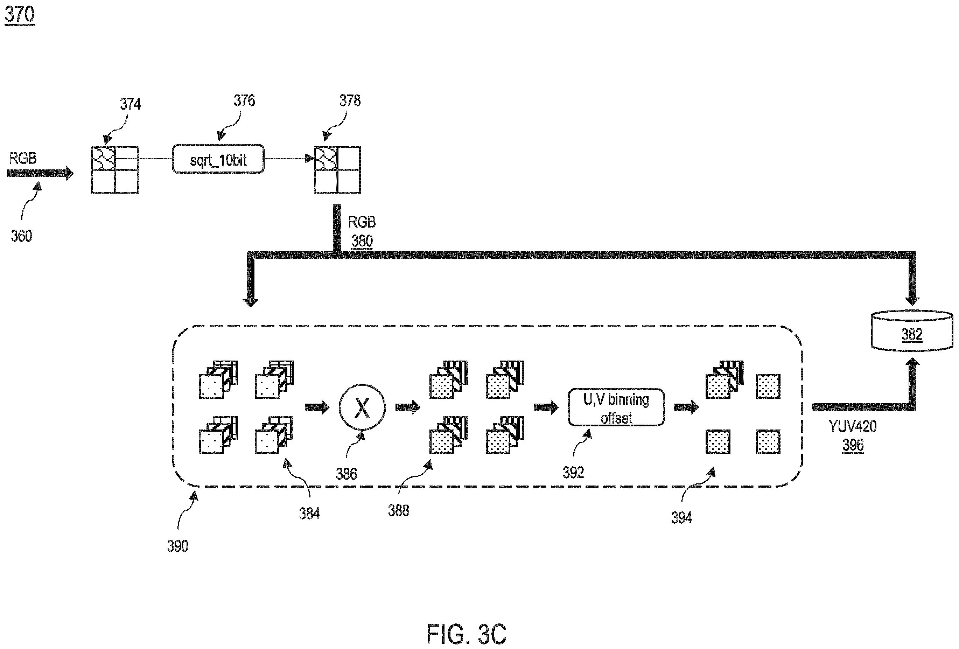

The data received at the pixel buffer 204 is transmitted to the minimal processing pipe 206, which generates a small scale image that is output to an output buffer 208 and stored in a first memory 210. The minimal processing pipe is discussed in greater detail with respect to FIGS. 3A-3C. In various examples, the small scale image stored in the first memory 210 is one of an RGB image and a YUV image. As described in greater detail with respect to FIG. 3C, the output format can be determined by an application and/or a user. The small scale image stored in the first memory 210 is used by an AI analysis block 212 to generate high level understanding data 214.

The AI analysis block 212 can be an image processing unit including an artificial intelligence algorithm, configured to generate high level understanding data 214 for the small scale image from the first memory 210. In some examples, the AI algorithm is a semantic segmentation algorithm, which can assign a class label to pixels in the image by identifying groups of pixels and classifying the groups of pixels according to various characteristics. In some examples, the AI algorithm is an object detection algorithm, a person detection algorithm, and/or a face detection algorithm. In some examples, the AI algorithm is a scene classification algorithm, which can classify the scene as belonging to one of several categories, such as indoor scene, outdoor scene, daytime scene, and nighttime scene. In some examples, the AI algorithm is a mid-level image understanding, such as local tone mapping. In some examples, the AI algorithm is an image segmentation algorithm, such as instance segmentation and/or panoptic segmentation. The image segmentation algorithm can assign labels to pixels in the image to mark object boundaries, region boundaries, different object shapes, and region shapes in the image. The image segmentation algorithm can classify pixels using information such as color, contrast, location in the image, and so on.

The AI analysis block 212 processes the small scale image using the artificial intelligence algorithm and outputs the high level understanding data 214. The AI analysis block 212 can be a neural network configured to generate high level understanding data 214 for the small scale image from the first memory 210. In some examples, the AI analysis block 212 can be a deep neural network, as described with respect to FIGS. 1 and 5 herein. The AI analysis block 212 processes the small scale image using a neural network and outputs the high level understanding data 214. The full image processing pipe 232 can receive the high level understanding data 214 and use the data 214 in processing in the full image.

In some examples, the high level understanding data 214 can be a segmentation map. A segmentation map can identify objects and/or features of the image, and provide information about the location of the identified objects and/or features in the image. In some examples, a segmentation map assigns a class to each area of the small scale image. In some examples, the segmentation map can be used to cluster parts of the image that belong to the same class, such as parts having the same color, texture, or other feature. The segmentation map data from the small scale image can be used by the full image processing pipe 232 to generate a corresponding generalized segmentation map of the full scale image before processing the full scale image. In particular, the segmentation map (which was generated based on the small scale image) can be upscaled to map it to match the resolution of the full scale image received at the full image processing pipe. In one example, for every pixel in the segmentation map generated based on the small scale image, there is a corresponding segment including multiple pixels in the full scale image. In some examples, the segmentation map data from the small scale image can be used by the full image processing pipe 232 to identify features and/or objects in the full scale image. In some examples, the full image processing pipe 232 can adjust processing parameters for a selected area of the full scale image based on the high level understanding of the corresponding pixel(s) in the segmentation map. In various examples, the full image processing pipe 232 processes an area of the full scale filtered image corresponding to a person differently from how the full image processing pipe 232 processes an area of the full scale filtered image corresponding to sky. Thus, the full image processing pipe 232 can have different processing values and/or parameters for a person, for sky, for trees, for mountains, for ocean, etc. In some examples, for any pixels and/or areas of the full scale image for which the high level understanding is less than 100% sure of the corresponding object to which the pixel belongs, a weighted sum can be used in generating parameters and/or values for processing according to a confidence level of the high level understanding for the pixel and/or area.

In some examples, the high level understanding data 214 is a scene level understanding. For example, the high level understanding data 214 determine the setting of the scene in the image, such as an indoor scene (e.g, a home, an office, a gym, a concert, etc) or an outdoor scene (e.g., a beach, an ocean, a forest, a mountain, a pool, a backyard, etc.). In some examples, the high level understanding data 214 can include detection of one or more people, detection of one or more objects, and/or identification of one or more people and/or objects. In some examples, the high level understanding data 214 can include motion estimation.

In various examples, the high level understanding can be used to focus processing of the full scale filtered image. For example, if the full scale image processing pipe 232 receives information about one or more people detected in selected areas of the image, the full scale image processing pipe 232 can focus processing on the selected areas.

According to various examples, the image data at the first memory 210 is created simultaneously with the image data at the second memory 230. In some examples, because the image data at the first memory 210 is small scale image data, the image data in the first memory is created before the image data at the second memory 230. In some examples, the high level processing pipeline 220 generates the high level understanding data simultaneously with the generation of the full scale image data at the second memory 230.

The image data at second memory 230 is full scale image data. In some examples, the image data at the second memory 230 is Bayer capture image data. That is, the image data from the buffer 204 can be transformed using a Bayer filter to generate an RGB image. In some examples, demosaicing is also performed on the image data.

The image data from the second memory 230 is used at the full image processing pipe 232 for AI processing of the full image. In particular, the full image processing pipe can include a neural network that receives as input the full scale image data from the second memory 230 and the high level understanding data 214. The neural network can be a deep learning system such as the deep learning system 100 described with respect to FIG. 1, and it can be a DNN as described with respect to FIG. 5.

### Example Minimal Image Signal Processing Pipe

FIGS. 3A-3C illustrate an example of a minimal image signal processing pipe, in accordance with various examples. The minimal image signal processing pipe can be used to generate a small scale image for early scene understanding. In some examples, the minimal image signal processing pipe can be the minimal processing pipe 206 described with respect to FIG. 2. In the example shown in FIGS. 3A-3C, a 4x4 square of pixels (16 pixels) is reduced to a single pixel. However, in various implementations, any selected scaling can be used to downscale the input image and generate a downscaled image for use in the minimal processing pipeline.

FIG. 3A shows a first part 300 of the minimal image signal processing pipe, in accordance with various examples. In this example, a raw image 302 is received. In various examples, the raw image 302 is a portion of a full scale raw image as received at the buffer 204 of FIG. 2. In some examples, the raw image data received at the buffer 204 is transmitted to the minimal image signal processing pipe as it is received from the sensor 202. In some examples, the raw image data received at the buffer 204 is transmitted to the minimal image signal processing pipe when selected amounts of raw image data are received at the buffer 204.

In some instances, the raw image 302 is an unsigned 10 bit image. The raw image is filtered using a Bayer transformation to generate the 4x4 square of pixels 304, and a demosaicer uses a demosaicing algorithm on the filtered square of pixels 304. In some examples, a demosaic scaler is used to reduce each 2x2 square of filtered pixels 306 to one pixel 308 with RGB components. In various examples, a different filter and/or demosaicer can be used to generate different color components and/or a different color space. In one example, the pixel 308 can be YUV components instead of RGB components. In one example, the pixel 308 can be MP12 components instead of RGB components. With respect to the minimal image signal processing pipe in FIGS. 3A-3C, the discussion uses the example of RGB color components.

In various examples, rather than receiving the entire captured image frame simultaneously, the raw image 302 is received at the minimal image signal processing pipe one piece at a time. In some examples, one line of the image is received in a buffer, then the next line, etc. In some examples, multiple lines of the image are received, then multiple next lines, etc. As the image data is accumulated in the buffer, the minimal processing pipe begins processing the data, such that the smaller image is created simultaneously with the reception of the image data in the buffer (e.g., buffer 204 of FIG. 2).

According to various examples, when the image 304 is downscaled, with each group of four pixels 306 scaling to one pixel 308a having RGB components. The RGB output from the initial demosaic scaling is input to a binning function 310. In some examples, the four RGB pixels 308a, 308b, 308c, 308d become the pixel area 316 for the binning function. Binning 310 is then used on the RGB pixels to reduce image size based on a binning factor 312. Thus, as shown in FIG. 3A, the pixels 316 are reduced to a single pixel 318. In this manner, the 4x4 square of pixels 304 is reduced to the single RGB pixel 318. The output of the binning function 310 is a reduced size RGB image 320. In particular, the 4x4 square of pixels 314 are reduced to the 2x2 square of pixels 324.

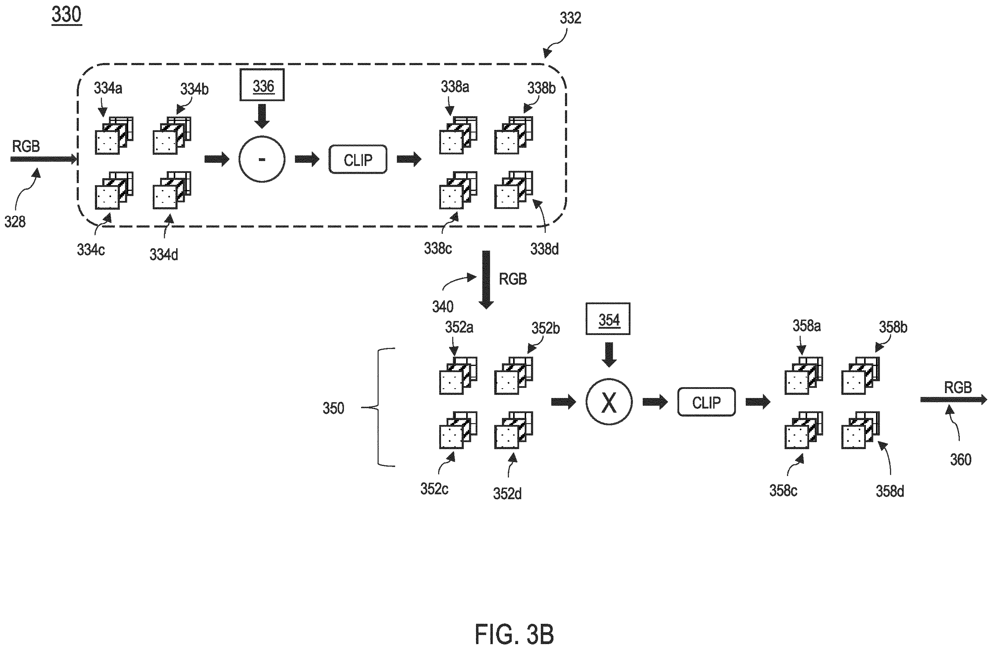

FIG. 3B shows a second part 330 of the minimal image signal processing pipe, in accordance with various examples. Optionally, in some examples, black level correction 332 is performed on the RGB image 320. Black level correction 332 adapts each pixel value to a true black according to sensor characteristics. In particular, each RGB pixel 334a, 334b, 334c, 334d of the input 328 is adapted by a black level correction value 336 to generate corrected RGB pixels 338a, 338b, 338c, 338d. The RGB output 340 from the black level correction 332 is the color adjusted.

At block 350, the RGB output 340 is color adjusted to correct the colors at each pixel, including white balance correction and correct color reproduction. A color adjustment gain 354 is applied to each pixel 352a, 352b, 352c, 352d to generate color-adjusted pixels 358a, 358b, 358c, 358d. The color-adjusted pixels 358a, 358b, 358c, 358d are output as RGB output 360.

FIG. 3C shows a third part 370 of the minimal image signal processing pipe, in accordance with various examples. The RGB output 360 is tone adjusted to convert the image from linear to visual (perceptual) space. In particular, a tone adjustment function is applied to each pixel 374 to generate a tone adjusted pixel 378. The tone adjusted RGB output 380 can be saved in a memory 382 and used by an AI analysis block to generate a high level understanding of the image. In some examples, the memory 382 is the first memory 210 of FIG. 2, and the tone adjusted RGB output 380 is used by the AI analysis block 212 to generate the high level understanding data 214.

In some examples, the RGB output 380 is converted to a different color space at a conversion block 390. For example, the RGB output 380 can be converted to a YUV color space. In some instances, the RGB output 380 can be converted to a YUV420 color space. In particular, RGB pixels 384 can be converted to YUV pixels 388 using a fixed matrix conversion 386. In some examples, the YUV pixels 388 can be input to a U, V binning offset module 392 and converted to YUV420 pixels 394. The YUV420 pixels 394 can be output as YUV420 output 396 and stored in the memory 382. In various examples, only one format of the image is saved in the memory 382. Thus, either RGB output 380 is stored in the memory 382 or the YUV420 output 396 is stored in the memory 382.

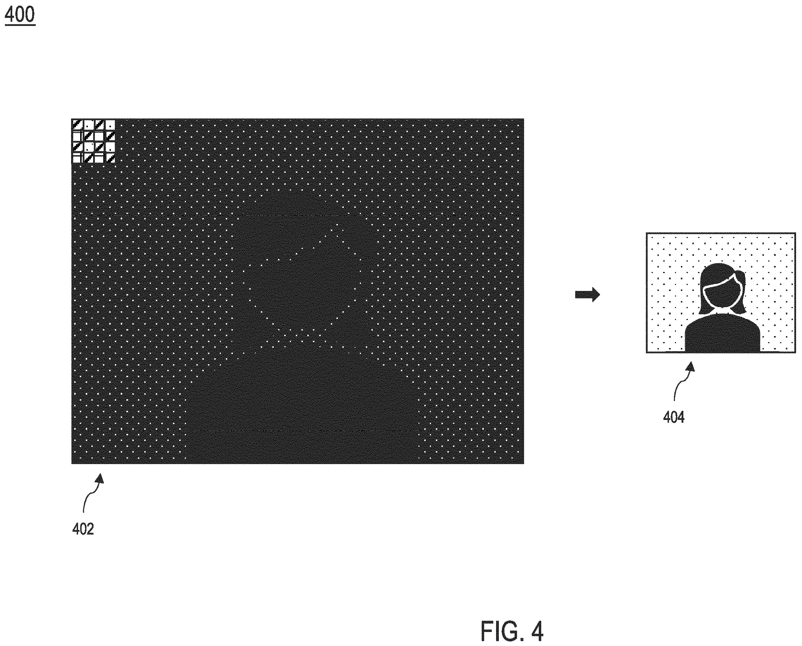

FIG. 4 shows an example 400 of an input to and an output from the minimal image signal processing pipe, in accordance with various embodiments. A large Bayer filtered raw image 402 is received as the raw image input 302 at the pipe of FIGS. 3A-3C, and a small processed RGB image 404 is output from the pipe 300. In some examples, the large Bayer filtered raw image 402 is 2592x1944 pixels, and the small processed RGB image 404 is 324x242 pixels. The small processed RGB image 404 can be used to generate a high level understanding of the full scale image, as discussed, for example, with respect to FIG. 2.

### Example Deep Neural Network

FIG. 5 illustrates an example DNN 500, in accordance with various embodiments. For purpose of illustration, the DNN 500 in FIG. 5 is a CNN. In other embodiments, the DNN 500 may be other types of DNNs. The DNN 500 is trained to receive images and output classifications of objects in the images. In the embodiments of FIG. 5, the DNN 500 receives an input image 505 that includes objects 515, 525, and 535. In various examples, the DNN 500 also receives an input high level understanding 502 from a minimal processing pipeline, as described above with respect to FIGS. 2, 3A-3C, and 4. The high level understanding 502 can be a segmentation map. The DNN 500 includes a sequence of layers comprising a plurality of convolutional layers 510 (individually referred to as "convolutional layer 510"), a plurality of pooling layers 520 (individually referred to as "pooling layer 520"), and a plurality of fully connected layers 530 (individually referred to as "fully connected layer 530"). In other embodiments, the DNN 500 may include fewer, more, or different layers. In some examples, the DNN 500 uses the high level understanding 502 to decrease the number of layers and improve DNN 500 efficiency. In an inference of the DNN 500, the layers of the DNN 500 execute tensor computation that includes many tensor operations, such as convolution (e.g., multiply-accumulate (MAC) operations, etc.), pooling operations, elementwise operations (e.g., elementwise addition, elementwise multiplication, etc.), other types of tensor operations, or some combination thereof.

The convolutional layers 510 summarize the presence of features in the input image 505. The convolutional layers 510 function as feature extractors. In some examples, the high level understanding input 502 includes information about features in the input image 505, thereby reducing the convolutional layers 510. In various examples, the high level understanding input 502 can include approximate object locations, and thus, the high level understanding can be used to reduce an area of inference to the location where an object is expected to be located. In various examples, the high level understanding can include semantic segmentation, and the high level understanding input 502 can be used to process different semantic areas of the image using different image quality trade-offs and thus optimizing overall image quality. For instance, an extra blur can be applied to flat regions such as sky. In another example, specific color processing can be applied to human skin (and/or to a human face) to optimize its rendering, etc.

The first layer of the DNN 500 is a convolutional layer 510. In an example, a convolutional layer 510 performs a convolution on an input tensor 540 (also referred to as IFM 540) and a filter 550. As shown in FIG. 5, the IFM 540 is represented by a 7×7×3 three-dimensional (3D) matrix. The IFM 540 includes 3 input channels, each of which is represented by a 7×7 two dimensional (2D) matrix. The 7×7 2D matrix includes 7 input elements (also referred to as input points) in each row and seven input elements in each column. The filter 550 is represented by a 3×3×3 3D matrix. The filter 550 includes 3 kernels, each of which may correspond to a different input channel of the IFM 540. A kernel is a 2D matrix of weights, where the weights are arranged in columns and rows. A kernel can be smaller than the IFM. In the embodiments of FIG. 5, each kernel is represented by a 3×3 2D matrix. The 3×3 kernel includes 3 weights in each row and three weights in each column. Weights can be initialized and updated by backpropagation using gradient descent. The magnitudes of the weights can indicate importance of the filter 550 in extracting features from the IFM 540.

The convolution includes MAC operations with the input elements in the IFM 540 and the weights in the filter 550. The convolution may be a standard convolution 563 or a depthwise convolution 583. In the standard convolution 563, the whole filter 550 slides across the IFM 540. All the input channels are combined to produce an output tensor 560 (also referred to as output feature map (OFM) 560). The OFM 560 is represented by a 5×5 2D matrix. The 5×5 2D matrix includes 5 output elements (also referred to as output points) in each row and five output elements in each column. For purpose of illustration, the standard convolution includes one filter in the embodiments of FIG. 5. In embodiments where there are multiple filters, the standard convolution may produce multiple output channels in the OFM 560.

The multiplication applied between a kernel-sized patch of the IFM 540 and a kernel may be a dot product. A dot product is the elementwise multiplication between the kernel-sized patch of the IFM 540 and the corresponding kernel, which is then summed, always resulting in a single value. Because it results in a single value, the operation is often referred to as the "scalar product." Using a kernel smaller than the IFM 540 is intentional as it allows the same kernel (set of weights) to be multiplied by the IFM 540 multiple times at different points on the IFM 540. Specifically, the kernel is applied systematically to each overlapping part or kernel-sized patch of the IFM 540, left to right, top to bottom. The result from multiplying the kernel with the IFM 540 one time is a single value. As the kernel is applied multiple times to the IFM 540, the multiplication result is a 2D matrix of output elements. As such, the 2D output matrix (i.e., the OFM 560) from the standard convolution 563 is referred to as an OFM.

In the depthwise convolution 583, the input channels are not combined. Rather, MAC operations are performed on an individual input channel and an individual kernel and produce an output channel. As shown in FIG. 5, the depthwise convolution 583 produces a depthwise output tensor 580. The depthwise output tensor 580 is represented by a 5×5×3 3D matrix. The depthwise output tensor 580 includes 3 output channels, each of which is represented by a 5×5 2D matrix. The 5×5 2D matrix includes 5 output elements in each row and five output elements in each column. Each output channel is a result of MAC operations of an input channel of the IFM 540 and a kernel of the filter 550. For instance, the first output channel (patterned with dots) is a result of MAC operations of the first input channel (patterned with dots) and the first kernel (patterned with dots), the second output channel (patterned with horizontal strips) is a result of MAC operations of the second input channel (patterned with horizontal strips) and the second kernel (patterned with horizontal strips), and the third output channel (patterned with diagonal stripes) is a result of MAC operations of the third input channel (patterned with diagonal stripes) and the third kernel (patterned with diagonal stripes). In such a depthwise convolution, the number of input channels equals the number of output channels, and each output channel corresponds to a different input channel. The input channels and output channels are referred to collectively as depthwise channels. After the depthwise convolution, a pointwise convolution 593 is then performed on the depthwise output tensor 580 and a 1×1×3 tensor 590 to produce the OFM 560.

The OFM 560 is then passed to the next layer in the sequence. In some embodiments, the OFM 560 is passed through an activation function. An example activation function is the rectified linear activation function (ReLU). ReLU is a calculation that returns the value provided as input directly, or the value zero if the input is zero or less. The convolutional layer 510 may receive several images as input and calculate the convolution of each of them with each of the kernels. This process can be repeated several times. For instance, the OFM 560 is passed to the subsequent convolutional layer 510 (i.e., the convolutional layer 510 following the convolutional layer 510 generating the OFM 560 in the sequence). The subsequent convolutional layers 510 perform a convolution on the OFM 560 with new kernels and generates a new feature map. The new feature map may also be normalized and resized. The new feature map can be kernelled again by a further subsequent convolutional layer 510, and so on.

In some embodiments, a convolutional layer 510 has four hyperparameters: the number of kernels, the size F kernels (e.g., a kernel is of dimensions F×F×D pixels), the S step with which the window corresponding to the kernel is dragged on the image (e.g., a step of one means moving the window one pixel at a time), and the zero-padding P (e.g., adding a black contour of P pixels thickness to the input image of the convolutional layer 510). The convolutional layers 510 may perform various types of convolutions, such as 2-dimensional convolution, dilated or atrous convolution, spatial separable convolution, depthwise separable convolution, transposed convolution, and so on. The DNN 500 includes 16 convolutional layers 510. In other embodiments, the DNN 500 may include a different number of convolutional layers.

The pooling layers 520 down-sample feature maps generated by the convolutional layers, e.g., by summarizing the presence of features in the patches of the feature maps. A pooling layer 520 is placed between two convolution layers 510: a preceding convolutional layer 510 (the convolution layer 510 preceding the pooling layer 520 in the sequence of layers) and a subsequent convolutional layer 510 (the convolution layer 510 subsequent to the pooling layer 520 in the sequence of layers). In some embodiments, a pooling layer 520 is added after a convolutional layer 510, e.g., after an activation function (e.g., ReLU, etc.) has been applied to the OFM 560.

A pooling layer 520 receives feature maps generated by the preceding convolution layer 510 and applies a pooling operation to the feature maps. The pooling operation reduces the size of the feature maps while preserving their important characteristics. Accordingly, the pooling operation improves the efficiency of the CNN and avoids over-learning. The pooling layers 520 may perform the pooling operation through average pooling (calculating the average value for each patch on the feature map), max pooling (calculating the maximum value for each patch of the feature map), or a combination of both. The size of the pooling operation is smaller than the size of the feature maps. In various embodiments, the pooling operation is 2×2 pixels applied with a stride of two pixels, so that the pooling operation reduces the size of a feature map by a factor of 2, e.g., the number of pixels or values in the feature map is reduced to one quarter the size. In an example, a pooling layer 520 applied to a feature map of 6×6 results in an output pooled feature map of 3×3. The output of the pooling layer 520 is inputted into the subsequent convolution layer 510 for further feature extraction. In some embodiments, the pooling layer 520 operates upon each feature map separately to create a new set of the same number of pooled feature maps.

The fully connected layers 530 are the last layers of the CNN. The fully connected layers 530 may be convolutional or not. The fully connected layers 530 receive an input operand. The input operand defines the output of the convolutional layers 510 and pooling layers 520 and includes the values of the last feature map generated by the last pooling layer 520 in the sequence. The fully connected layers 530 apply a linear combination and an activation function to the input operand and generate a vector. The vector may contain as many elements as there are classes: element i represents the probability that the image belongs to class i. Each element is therefore between 0 and 1, and the sum of all is worth one. These probabilities are calculated by the last fully connected layer 530 by using a logistic function (binary classification) or a softmax function (multi-class classification) as an activation function.

In some embodiments, the fully connected layers 530 classify the input image 505 and return an operand of size N, where N is the number of classes in the image classification problem. In the embodiments of FIG. 5, N equals 3, as there are three objects 515, 525, and 535 in the input image. Each element of the operand indicates the probability for the input image 505 to belong to a class. To calculate the probabilities, the fully connected layers 530 multiply each input element by weight, make the sum, and then apply an activation function (e.g., logistic if N=2, softmax if N>2). This is equivalent to multiplying the input operand by the matrix containing the weights. In an example, the vector includes 3 probabilities: a first probability indicating the object 515 being a tree, a second probability indicating the object 525 being a car, and a third probability indicating the object 535 being a person. In other embodiments where the input image 505 includes different objects or a different number of objects, the individual values can be different.

### Example Method of Using a Minimal Image Signal Processing Pipeline

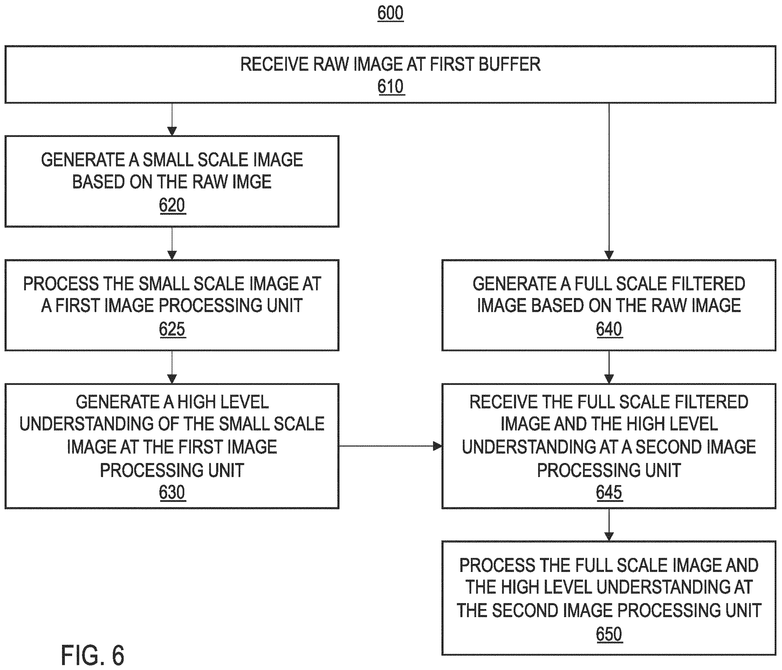

FIG. 6 is a flowchart showing a method 600 of using a minimal image signal processing for early scene understanding, in accordance with various embodiments. The method 600 may be performed by the image processing systems of FIGS. 2 and 3A-3C. Although the method 600 is described with reference to the flowchart illustrated in FIG. 6, many other methods for minimal image signal processing may alternatively be used. For example, the order of execution of the steps in FIG. 6 may be changed. As another example, some of the steps may be changed, eliminated, or combined.

In various examples, the method 600 is a method for image signal processing. At step 610, a raw image is received at a first buffer. At steps 620, 625, and 630, the raw image is processed in a first processing pipe. In particular, at step 620, a small scale image is generated based on the raw image. In some examples, the small scale image is a downscaled RGB image of the raw image. In various examples, the pixels of the raw image are processed by the first processing pipe as they are received at the first buffer. In some examples, after a selected number of lines of pixels are received at the first buffer, the pixels in the first buffer are processed at the first processing pipe to begin generating the small scale image. At step 625, the small scale image is processed by a first image processing unit. In various examples, the first image processing unit includes AI capabilities. The first image processing unit can be a deep learning system, and in some examples, the first image processing unit is a neural network, such as a DNN and/or a CNN. At step 630, the first image processing unit generates a high level understanding of the small scale image. For instance, the first image processing unit can generate a segmentation map of the small scale image.

At steps 640, 645, and 650, the raw image is processed in a second processing pipe. At step 640, a full scale filtered image is generated based on the raw image. In some examples, at step 640, the raw image is processed to generate a full scale RGB image. In some examples, at step 640, the raw image is processed to generate a full scale YUV image. In some examples, at step 640, the raw image is processed to generated another type of filtered image.

At step 645, the high level understanding from step 630 and the full scale filtered image from step 640 are received at a second image processing unit. At step 650, the high level understanding and the full scale filtered image are processed by the second image processing unit. In some examples, the output of the image processing unit is a full scale processed image. In various examples, the second image processing unit includes AI capabilities. The second image processing unit can be a deep learning system, and in some examples, the second image processing unit is a neural network, such as a DNN and/or a CNN. In various examples, the second image processing unit outputs a full scale processed output image.

In various examples, the high level understanding can be used by the second image processing unit to process the full scale filtered image to account for various scenarios such as low light, high light, long exposure, short exposure, and so on. In some examples, the high level understanding includes a segmentation map that is used to identify features and/or objects in the full scale filtered image, as well as feature and/or object locations in the full scale filtered image. In some examples, the high level understanding provides a scene level understanding of the image. In various instances, the high level understanding does not provide a pixel level understanding of the image. A scene level understanding can include identification of scene type (e.g., office scene, kitchen scene, outdoor scene, beach scene, ocean scene, mountain scene, sunset scene, etc.), detection of objects in the scene, and detection of people in the scene.

In various examples, the first image processing unit and the second image processing unit are the same image processing unit. When the first and second image processing units are the same image processing unit, the image processing unit processes the small scale image and then uses the high level understanding generated from processing the small scale image in processing the full scale filtered image. In some examples, when the first and second image processing units are the same image processing unit, while image processing unit generates the high level understanding while the full scale filtered image is being generated.

### Example Computing Device

FIG. 7 is a block diagram of an example computing device 700, in accordance with various embodiments. In some embodiments, the computing device 700 can be used as at least part of the deep learning system 100, the image processing system 200, the processing pipe of FIGS. 3A-3C, and/or the DNN 500. A number of components are illustrated in FIG. 7 as included in the computing device 700, but any one or more of these components may be omitted or duplicated, as suitable for the application. In some embodiments, some or all of the components included in the computing device 700 may be attached to one or more motherboards. In some embodiments, some or all of these components are fabricated onto a single system on a chip (SoC) die. Additionally, in various embodiments, the computing device 700 may not include one or more of the components illustrated in FIG. 7, but the computing device 700 may include interface circuitry for coupling to the one or more components. For example, the computing device 700 may not include a display device 706, but may include display device interface circuitry (e.g., a connector and driver circuitry) to which a display device 706 may be coupled. In another set of examples, the computing device 700 may not include an audio input device 718 or an audio output device 708, but may include audio input or output device interface circuitry (e.g., connectors and supporting circuitry) to which an audio input device 718 or audio output device 708 may be coupled.

The computing device 700 may include a processing device 702 (e.g., one or more processing devices). The processing device 702 processes electronic data from registers and/or memory to transform that electronic data into other electronic data that may be stored in registers and/or memory. The computing device 700 may include a memory 704, which may itself include one or more memory devices such as volatile memory (e.g., DRAM), nonvolatile memory (e.g., read-only memory (ROM)), high bandwidth memory (HBM), flash memory, solid state memory, and/or a hard drive. In some embodiments, the memory 704 may include memory that shares a die with the processing device 702. In some embodiments, the memory 704 includes one or more non-transitory computer-readable media storing instructions executable to perform deep learning operations, e.g., the methods described above in conjunction with FIGS. 2, 3A-3C, 4, 5, and/or 6. The instructions stored in the one or more non-transitory computer-readable media may be executed by the processing device 702.

In some embodiments, the computing device 700 may include a communication chip 712 (e.g., one or more communication chips). For example, the communication chip 712 may be configured for managing wireless communications for the transfer of data to and from the computing device 700. The term "wireless" and its derivatives may be used to describe circuits, devices, systems, methods, techniques, communications channels, etc., that may communicate data through the use of modulated electromagnetic radiation through a nonsolid medium. The term does not imply that the associated devices do not contain any wires, although in some embodiments they might not.

The communication chip 712 may implement any of a number of wireless standards or protocols, including but not limited to Institute for Electrical and Electronic Engineers (IEEE) standards including Wi-Fi (IEEE 802.10 family), IEEE 802.16 standards (e.g., IEEE 802.16-2005 Amendment), Long-Term Evolution (LTE) project along with any amendments, updates, and/or revisions (e.g., advanced LTE project, ultramobile broadband (UMB) project (also referred to as "3GPP2"), etc.). IEEE 802.16 compatible Broadband Wireless Access (BWA) networks are generally referred to as WiMAX networks, an acronym that stands for worldwide interoperability for microwave access, which is a certification mark for products that pass conformity and interoperability tests for the IEEE 802.16 standards. The communication chip 712 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication chip 712 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication chip 712 may operate in accordance with Code-division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. The communication chip 712 may operate in accordance with other wireless protocols in other embodiments. The computing device 700 may include an antenna 722 to facilitate wireless communications and/or to receive other wireless communications (such as AM or FM radio transmissions).

In some embodiments, the communication chip 712 may manage wired communications, such as electrical, optical, or any other suitable communication protocols (e.g., the Ethernet). As noted above, the communication chip 712 may include multiple communication chips. For instance, a first communication chip 712 may be dedicated to shorter-range wireless communications such as Wi-Fi or Bluetooth, and a second communication chip 712 may be dedicated to longer-range wireless communications such as global positioning system (GPS), EDGE, GPRS, CDMA, WiMAX, LTE, EV-DO, or others. In some embodiments, a first communication chip 712 may be dedicated to wireless communications, and a second communication chip 712 may be dedicated to wired communications.

The computing device 700 may include battery/power circuitry 714. The battery/power circuitry 714 may include one or more energy storage devices (e.g., batteries or capacitors) and/or circuitry for coupling components of the computing device 700 to an energy source separate from the computing device 700 (e.g., AC line power).

The computing device 700 may include a display device 706 (or corresponding interface circuitry, as discussed above). The display device 706 may include any visual indicators, such as a heads-up display, a computer monitor, a projector, a touchscreen display, a liquid crystal display (LCD), a light-emitting diode display, or a flat panel display, for example.

The computing device 700 may include an audio output device 708 (or corresponding interface circuitry, as discussed above). The audio output device 708 may include any device that generates an audible indicator, such as speakers, headsets, or earbuds, for example.

The computing device 700 may include an audio input device 718 (or corresponding interface circuitry, as discussed above). The audio input device 718 may include any device that generates a signal representative of a sound, such as microphones, microphone arrays, or digital instruments (e.g., instruments having a musical instrument digital interface (MIDI) output).

The computing device 700 may include a GPS device 716 (or corresponding interface circuitry, as discussed above). The GPS device 716 may be in communication with a satellite-based system and may receive a location of the computing device 700, as known in the art.

The computing device 700 may include another output device 710 (or corresponding interface circuitry, as discussed above). Examples of the other output device 710 may include an audio codec, a video codec, a printer, a wired or wireless transmitter for providing information to other devices, or an additional storage device.

The computing device 700 may include another input device 720 (or corresponding interface circuitry, as discussed above). Examples of the other input device 720 may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (RFID) reader.

The computing device 700 may have any desired form factor, such as a handheld or mobile computer system (e.g., a cell phone, a smart phone, a mobile internet device, a music player, a tablet computer, a laptop computer, a netbook computer, an ultrabook computer, a personal digital assistant (PDA), an ultramobile personal computer, etc.), a desktop computer system, a server or other networked computing component, a printer, a scanner, a monitor, a set-top box, an entertainment control unit, a vehicle control unit, a digital camera, a digital video recorder, or a wearable computer system. In some embodiments, the computing device 700 may be any other electronic device that processes data.

### Selected Examples

The following paragraphs provide various examples of the embodiments disclosed herein.

Example 1 provides a method including receiving a raw image at a first buffer; processing the raw image in a first processing pipe, including: generating a small scale image, processing the small scale image at a first image processing unit, generating, at the first image processing unit, a high level understanding of the small scale image; processing the raw image in a second processing pipe, including: generating a filtered full scale image, receiving the high level understanding from the first processing pipe, and processing, at a second image processing unit, the filtered full scale image and the high level understanding.

Example 2 provides the method of example 1, where generating the high level understanding includes generating an early scene understanding of the small scale image

Example 3 provides the method of example 2, where generating the high level understanding includes generating a segmentation map of the small scale image, and where processing the raw image in a second processing pipe further includes scaling the segmentation map to a size of the full scale image.

Example 4 provides the method of example 1, where processing the small scale image at a first image processing unit includes applying artificial intelligence algorithms to the small scale image to generate the high level understanding.

Example 5 provides the method of example 1, where processing the small scale image at a first image processing unit and generating the high level understanding include processing the small scale image at a first neural network and generating the high level understanding at the first neural network.

Example 6 provides the method of example 1, where receiving the raw image includes receiving a first portion of the raw image at a first time and receiving a second portion of the raw image at a second time, and where generating the small scale image includes generating a first small scale image portion based on the first portion of the raw image at the first time, generating a second small scale image portion based on the second portion of the raw image at the second time, and combining the first small scale image portion and the second small scale image portion.

Example 7 provides the method of example 5, where generating the small scale image includes generating one of a small scale RGB image and a small scale YUV image, and where generating the filtered full scale image includes generating one of full scale RGB image and a full scale YUV image.

Example 8 provides one or more non-transitory computer-readable media storing instructions executable to perform operations, the operations including receiving a raw image at a first buffer; processing the raw image in a first processing pipe, including: generating a small scale image, processing the small scale image at a first image processing unit, generating, at the first image processing unit, a high level understanding of the small scale image; processing the raw image in a second processing pipe, including: generating a filtered full scale image, receiving the high level understanding from the first processing pipe, and processing, at a second image processing unit, the filtered full scale image and the high level understanding.

Example 9 provides the one or more non-transitory computer-readable media of example 8, where generating the high level understanding includes generating an early scene understanding of the small scale image

Example 10 provides the one or more non-transitory computer-readable media of example 8, where generating the high level understanding includes generating a segmentation map of the small scale image, and where processing the raw image in a second processing pipe further includes scaling the segmentation map to a size of the full scale image.

Example 11 provides the one or more non-transitory computer-readable media of example 8, where processing the small scale image at a first image processing unit includes applying artificial intelligence algorithms to the small scale image to generate the high level understanding.

Example 12 provides the one or more non-transitory computer-readable media of example 8, where processing the small scale image at a first image processing unit and generating the high level understanding include processing the small scale image at a first neural network and generating the high level understanding at the first neural network.

Example 13 provides the one or more non-transitory computer-readable media of example 8, where receiving the raw image includes receiving a first portion of the raw image at a first time and receiving a second portion of the raw image at a second time, and where generating the small scale image includes generating a first small scale image portion based on the first portion of the raw image at the first time, generating a second small scale image portion based on the second portion of the raw image at the second time, and combining the first small scale image portion and the second small scale image portion.

Example 14 provides the one or more non-transitory computer-readable media of example 8, where generating the small scale image includes generating one of a small scale RGB image and a small scale YUV image, and where generating the filtered full scale image includes generating one of full scale RGB image and a full scale YUV image.

Example 15 provides an apparatus, including a computer processor for executing computer program instructions; and a non-transitory computer-readable memory storing computer program instructions executable by the computer processor to perform operations including receiving a raw image at a first buffer; processing the raw image in a first processing pipe, including: generating a small scale image, processing the small scale image at a first image processing unit, generating, at the first image processing unit, a high level understanding of the small scale image; processing the raw image in a second processing pipe, including: generating a filtered full scale image, receiving the high level understanding from the first processing pipe, and processing, at a second image processing unit, the filtered full scale image and the high level understanding.

Example 16 provides the apparatus of example 15, where generating the high level understanding includes generating an early scene understanding of the small scale image

Example 17 provides the apparatus of example 15, where generating the high level understanding includes generating a segmentation map of the small scale image, and where processing the raw image in a second processing pipe further includes scaling the segmentation map to a size of the full scale image.

Example 18 provides the apparatus of example 15, where processing the small scale image at a first image processing unit includes applying artificial intelligence algorithms to the small scale image to generate the high level understanding.

Example 19 provides the apparatus of example 15, where processing the small scale image at a first image processing unit and generating the high level understanding include processing the small scale image at a first neural network and generating the high level understanding at the first neural network.

Example 20 provides the apparatus of example 15, where receiving the raw image includes receiving a first portion of the raw image at a first time and receiving a second portion of the raw image at a second time, and where generating the small scale image includes generating a first small scale image portion based on the first portion of the raw image at the first time, generating a second small scale image portion based on the second portion of the raw image at the second time, and combining the first small scale image portion and the second small scale image portion.

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

## Claims

1. A method comprising:
receiving a raw image at a first buffer;
processing the raw image in a first processing pipe, including:
generating a small scale image,
processing the small scale image at a first image processing unit, and
generating, at the first image processing unit, a high level understanding of the small scale image; and
processing the raw image in a second processing pipe, including:
generating a filtered full scale image,
receiving the high level understanding from the first processing pipe, and
processing, at a second image processing unit, the filtered full scale image and the high level understanding.

2. The method according to claim 1, wherein generating the high level understanding includes generating an early scene understanding of the small scale image.

3. The method according to any of claims 1-2, wherein generating the high level understanding includes generating a segmentation map of the small scale image, and wherein processing the raw image in a second processing pipe further includes scaling the segmentation map to a size of the filtered full scale image.

4. The method according to any of claims 1-3, wherein processing the small scale image at a first image processing unit includes applying an artificial intelligence algorithm to the small scale image to generate the high level understanding.

5. The method according to any of claims 1-4, wherein processing the small scale image at a first image processing unit and generating the high level understanding include processing the small scale image at a first neural network and generating the high level understanding at the first neural network.

6. The method according to any of claims 1-5, wherein receiving the raw image includes receiving a first portion of the raw image at a first time and receiving a second portion of the raw image at a second time, and wherein generating the small scale image includes:
generating a first small scale image portion based on the first portion of the raw image at the first time,
generating a second small scale image portion based on the second portion of the raw image at the second time, and
combining the first small scale image portion and the second small scale image portion.

7. The method of claims 1-6, wherein generating the small scale image includes generating one of a small scale RGB image and a small scale YUV image, and wherein generating the filtered full scale image includes generating one of full scale RGB image and a full scale YUV image.

8. One or more non-transitory computer-readable media storing instructions executable to perform operations, the operations comprising:
receiving a raw image at a first buffer;
processing the raw image in a first processing pipe, including:
generating a small scale image,
processing the small scale image at a first image processing unit, and
generating, at the first image processing unit, a high level understanding of the small scale image; and
processing the raw image in a second processing pipe, including:
generating a filtered full scale image,
receiving the high level understanding from the first processing pipe, and
processing, at a second image processing unit, the filtered full scale image and the high level understanding.

9. The one or more non-transitory computer-readable media according to claim 8, wherein generating the high level understanding includes generating an early scene understanding of the small scale image.

10. The one or more non-transitory computer-readable media according to any of claims 8-9, wherein generating the high level understanding includes generating a segmentation map of the small scale image, and wherein processing the raw image in a second processing pipe further includes scaling the segmentation map to a size of the filtered full scale image.

11. The one or more non-transitory computer-readable media according to any of claims 8-10, wherein processing the small scale image at a first image processing unit includes applying an artificial intelligence algorithm to the small scale image to generate the high level understanding.

12. The one or more non-transitory computer-readable media according to any of claims 8-11, wherein processing the small scale image at a first image processing unit and generating the high level understanding include processing the small scale image at a first neural network and generating the high level understanding at the first neural network.

13. The one or more non-transitory computer-readable media according to any of claims 8-12, wherein receiving the raw image includes receiving a first portion of the raw image at a first time and receiving a second portion of the raw image at a second time, and wherein generating the small scale image includes:
generating a first small scale image portion based on the first portion of the raw image at the first time,
generating a second small scale image portion based on the second portion of the raw image at the second time, and
combining the first small scale image portion and the second small scale image portion.

14. An apparatus, comprising:
a computer processor for executing computer program instructions; and
a non-transitory computer-readable memory storing computer program instructions executable by the computer processor to perform operations comprising:
receiving a raw image at a first buffer;
processing the raw image in a first processing pipe, including:
generating a small scale image,
processing the small scale image at a first image processing unit, and
generating, at the first image processing unit, a high level understanding of the small scale image; and
processing the raw image in a second processing pipe, including:
generating a filtered full scale image,
receiving the high level understanding from the first processing pipe, and
processing, at a second image processing unit, the filtered full scale image and the high level understanding.

15. The apparatus according to claim 14, wherein generating the high level understanding includes generating an early scene understanding of the small scale image.
